# EUROPEAN PATENT APPLICATION

(11) **EP 4 640 314 A1**
(43) Date of publication of application: **29.10.2025**
(21) Application number: 22968972.4
(22) Date of filing: 23.12.2022
(51) Int. Cl.: B01L 3/00

(54) **MICROFLUIDIC DEVICE AND MICROFLUIDIC DETECTION DEVICE**

(71) Applicant: BGI Shenzhen, Shenzhen, Guangdong 518083 (CN); BGI Shenzhen Co., Ltd, Shenzhen, Guangdong 518083 (CN)
(72) Inventor: ZHAO, Zhentao, Shenzhen, Guangdong 518083 (CN); ZHANG, Yuning, Shenzhen, Guangdong 518083 (CN); LI, Yuxiang, Shenzhen, Guangdong 518083 (CN); YUN, Quanxin, Shenzhen, Guangdong 518083 (CN); DONG, Yuliang, Shenzhen, Guangdong 518083 (CN); ZHANG, Wenwei, Shenzhen, Guangdong 518083 (CN); XU, Xun, Shenzhen, Guangdong 518083 (CN)
(74) Representative: Wu, Ting
(86) International application number: PCT/CN2022/141270
(87) International publication number: WO 2024/130678

(57) **Abstract**

A microfluidic device (100) and a microfluidic detection apparatus (1000), wherein the microfluidic device (100) comprises a main body (110) and a flow channel switching assembly (120); the main body (110) is provided with multiple flow channels; the flow channel switching assembly (120) is rotatably connected to the main body (110); the flow channel switching assembly (120) is provided with liquid passing grooves; and the flow channel switching assembly (120) is configured to be rotatable relative to the main body (110) to adjust the position of the liquid passing groove, so that at least two of the multiple flow channels are in communication through the liquid passing groove. The microfluidic detection apparatus (1000) comprises a sensing device (200) and the microfluidic device (100).

## Description

### TECHNICAL FIELD

This invention relates to the field of microfluidic control technology, in particular to a microfluidic device and a microfluidic detection apparatus.

### BACKGROUND

Microfluidic technology is a technique for controlling, manipulating and detecting complex fluids at the microscale, and is a new interdisciplinary field developed on the basis of microelectronics, micromechanics, bioengineering and nanotechnology. In biology, chemistry, materials and other scientific experiments, fluid manipulate is often required, such as the preparation of sample DNA, liquid chromatography, PCR reaction, electrophoresis detection and other operations are all carried out in a liquid phase environment. If the steps of sample preparation, biochemical reaction, result detection, etc. are integrated into a biochip, the amount of fluid used in the experiment will be reduced from milliliter scale to microliter scale, and at this point, a highly functional microfluidic device becomes essential. Due to its advantages such as lightweight and compact size, low sample/reagent consumption, rapid reaction speed, high-throughput parallel processing and disposability, the microfluidic device has a wide range of applications in biotechnology research.

However, existing microfluidic devices can generally only control opening/closing of a single flow channel. To achieve switching between and opening/closing of multiple flow channels, a solution with multiple control valves is generally adopted, resulting in a complex structure and high cost of microfluidic devices.

### SUMMARY

This invention provides a microfluidic device and a microfluidic detection apparatus to solve the technical problem of existing microfluidic devices which are complex due to the use of a multi-valve structure to achieve switching between and opening/closing of multiple flow channels in the prior art.

To solve the above problem, this invention adopts the following solution:

In a first aspect, this invention provides a microfluidic device comprising a main body and a flow channel switching assembly; the main body is provided with multiple flow channels; the flow channel switching assembly is rotatably connected to the main body, the flow channel switching assembly is provided with liquid passing grooves, and the flow channel switching assembly is configured to be rotatable relative to the main body to adjust a position of the liquid passing groove, so that at least two of the multiple flow channels are in communication through the liquid passing groove.

In the optional solution of this invention, the multiple flow channels comprise a first flow channel, a second flow channel and a third flow channel; the liquid passing grooves comprise a first liquid passing groove, a second liquid passing groove and a third liquid passing groove; the flow channel switching assembly is configured in such a way that when the flow channel switching assembly is rotated to a first position, the first liquid passing groove establishes communication between the first flow channel and the second flow channel; the flow channel switching assembly is configured in such a way that when the flow channel switching assembly is rotated to a second position, the second liquid passing groove establishes communication between the second flow channel and the third flow channel, and the third liquid passing groove establishes communication between the first flow channel and the second flow channel.

In the optional solution of this invention, the multiple flow channels further comprise a fourth flow channel; the flow channel switching assembly is further configured in such a way that when the flow channel switching assembly is rotated to a third position, the second liquid passing groove establishes communication between the third flow channel and the fourth flow channel.

In the optional solution of this invention, the first flow channel comprises a second flow channel port, the second flow channel comprises a third flow channel port and a fourth flow channel port, the third flow channel comprises a fifth flow channel port and a sixth flow channel port, and the second flow channel port, the third flow channel port, the fourth flow channel port, the fifth flow channel port and the sixth flow channel port overlap with the flow channel switching assembly in a vertical direction.

In the optional solution of this invention, the first flow channel further comprises a first flow channel port located at a side of the flow channel switching assembly; the microfluidic device further comprises a fluid storage component connected to the main body and in communication with the first flow channel port.

In the optional solution of this invention, the third flow channel further comprises a seventh flow channel port, and the seventh flow channel port is located at a side of the flow channel switching assembly and is used to discharge a fluid inside the third flow channel.

In the optional solution of this invention, the fourth flow channel comprises an eighth flow channel port and a ninth flow channel port, and the eighth flow channel port overlaps with the flow channel switching assembly in a vertical direction.

In the optional solution of this invention, the third flow channel is a flow channel extending in a meandering manner for collecting fluid.

In the optional solution of this invention, the main body is provided with a sliding groove; the flow channel switching assembly comprises a position limiting component, and the position limiting component is configured to slide within the sliding groove during a rotation of the flow channel switching assembly relative to the main body, so as to switch the flow channel switching assembly among the first position, the second position and the third position.

In the optional solution of this invention, the sliding groove comprises a first section of sliding groove, a second section of sliding groove, and a third section of sliding groove, and the position limiting component is configured to slide along the first section of sliding groove to rotate the flow channel switching assembly to the first position, slide along the second section of sliding groove to rotate the flow channel switching assembly to the third position, and slide along the third section of sliding groove to rotate the flow channel switching assembly to the second position.

In the optional solution of this invention, the sliding groove is configured in such a way that the position limiting component is prevented from sliding to the first section of sliding groove when the position limiting component is located in the second section of sliding groove or the third section of sliding groove.

In the optional solution of this invention, a groove depth of the second section of sliding groove is equal to a groove depth of the third section of sliding groove, and the groove depths of the second section of sliding groove and the third section of sliding groove are greater than a groove depth of the first section of sliding groove.

In the optional solution of this invention, the flow channel switching assembly further comprises a rotating body and a sealing plate, the rotating body is rotatably connected to the main body, the sealing plate and the position limiting component are both connected to the rotating body and are rotatable with the rotating body, and the sealing plate is fitted to the main body; the first liquid passing groove, the second liquid passing groove and the third liquid passing groove are provided on the sealing plate.

In the optional solution of this invention, the main body comprises an upper plate, a flow channel plate and a lower plate, and both upper and lower surfaces of the flow channel plate are provided with flow channel grooves; the upper plate and the lower plate are respectively arranged on upper and lower sides of the flow channel plate to form the multiple flow channels together with the flow channel grooves, and the multiple flow channels comprises a second flow channel.

In the optional solution of this invention, the multiple flow channels further comprise a first flow channel and a fourth flow channel; the flow channel grooves comprise a first flow channel groove and a fourth flow channel groove, and the first flow channel groove and the fourth flow channel groove are arranged on the upper surface of the flow channel plate; the first flow channel groove forms the first flow channel together with the upper plate, and the fourth flow channel groove forms the fourth flow channel together with the upper plate.

In the optional solution of this invention, the multiple flow channels further comprise a third flow channel; the flow channel grooves comprise a third flow channel groove, and the third flow channel groove comprises a first section of third flow channel groove, a second section of third flow channel groove, and a third section of third flow channel groove; the first section of third flow channel groove and the third section of third flow channel groove are arranged on the upper surface of the flow channel plate, and the second section of third flow channel groove is arranged on the lower surface of the flow channel plate; the first section of third flow channel groove, the second section of third flow channel groove, and the third section of third flow channel groove are sequentially in communication with and form the third flow channel together with the upper plate and the lower plate.

In the optional solution of this invention, the second flow channel comprises a first section of second flow channel and a second section of second flow channel; the flow channel grooves comprise a second flow channel groove, the second flow channel groove comprises a first section of second flow channel groove and a second section of second flow channel groove, and the first section of second flow channel groove and the second section of second flow channel groove are arranged on the upper surface of the flow channel plate; a first buffer groove and a second buffer groove are provided on an upper surface of the lower plate; the first section of second flow channel groove is in communication with the first buffer groove and forms the first section of second flow channel together with the upper plate and the lower plate; the second section of second flow channel groove is in communication with the second buffer groove and forms the second section of second flow channel together with the upper plate and the lower plate; the first buffer groove is provided with a first liquid passing port therethrough, and the second buffer groove is provided with a second liquid passing port therethrough, wherein the first section of second flow channel and the second section of second flow channel are configured to be in communication through the first liquid passing port and the second liquid passing port.

In the optional solution of this invention, the main body is provided with a transparent observing area, and the observing area is located above the second flow channel.

In the optional solution of this invention, the multiple flow channels comprise the second flow channel; the second flow channel is provided with a flow channel buffer area, and a shape of the flow channel buffer area first gradually increases and then gradually decreases along an extension direction of the second flow channel.

In the optional solution of this invention, the main body is further provided with a sealed chamber, and the sealed chamber is located below the flow channel buffer area; the microfluidic device further comprises a membrane and a conductive sheet, wherein the membrane is arranged between the sealed chamber and the flow channel buffer area, the membrane is configured to allow ion transfer between a fluid in the sealed chamber and a fluid in the flow channel buffer area, and the conductive sheet is located below the membrane and used to transmit signals outward.

In the optional solution of this invention, the main body is further provided with a tenth flow channel port and an eleventh flow channel port, and both the tenth flow channel port and the eleventh flow channel port are in communication with the sealed chamber for injecting a detection liquid into the sealed chamber.

In the optional solution of this invention, a liquid storage groove is provided on the lower surface of the flow channel plate; the flow channel grooves comprise a second section of second flow channel groove, the second section of second flow channel groove is provided with a flow channel buffer area in communication with the liquid storage groove, and the liquid storage groove is closed by a membrane and the lower plate, thereby forming a sealed chamber; the membrane is arranged between the liquid storage groove and the flow channel buffer area, and the lower plate is provided with a conductive sheet at an overlapping position with the liquid storage groove in a vertical direction.

In a second aspect, this invention provides a microfluidic detection apparatus comprising a sensing device and the microfluidic device described above; the sensing device is provided at the second flow channel and connected to the main body, and the sensing device forms a sensing area together with a corresponding part of the main body that forms the second flow channel.

Compared with the prior art, this invention has the following beneficial effects:

The microfluidic device provided by this invention comprises a main body and a flow channel switching assembly, wherein the main body is provided with multiple flow channels therein. In this disclosure, functions of switching between and opening/closing of multiple flow channels can be achieved solely through the flow channel switching assembly, featuring a simplified structure, user-friendly operation. In addition, users can adjust the position of the liquid passing groove through the flow channel switching assembly according to different situations, establishing communication between different flow channels in the main body to adapt to different usage scenarios, and the function is relatively complete.

### BRIEF DESCRIPTION OF DRAWINGS

In order to provide a clearer explanation of technical solutions in the specific embodiments of this invention or in the existing technology, a brief introduction to the drawings required for describing the specific embodiments or existing technology will be given below. It is obvious that the drawings in the following description relate to some embodiments of this invention, and other drawings can be obtained based on these drawings for those skilled in the art without any creative labor.
Figure 1a is a schematic diagram of a flow channel layout inside a main body provided according to one embodiment of this disclosure;
Figure 1b is a schematic diagram of a flow channel switching assembly in a first position provided according to one embodiment of this disclosure;
Figure 1c is a schematic diagram of the flow channel switching assembly in a second position provided according to one embodiment of this disclosure;
Figure 1d is a schematic diagram of the flow channel switching assembly in a third position provided according to one embodiment of this disclosure;
Figure 2a is a schematic diagram of a microfluidic device provided according to one embodiment of this disclosure;
Figure 2b is an exploded view of the microfluidic device in Figure 2a;
Figure 2c is an enlarged partial view of E in Figure 2b;
Figure 2d is an exploded view of the flow channel switching assembly in Figure 2a;
Figure 3a is an exploded view of a microfluidic device provided according to one embodiment of this invention;
Figure 3b is an exploded view of a main body in Figure 3a from another perspective;
Figure 3c is an exploded view of a flow channel plate and a lower plate in Figure 3a from another perspective;
Figure 3d is a sectional view of the flow channel plate and lower plate in Figure 3a from another perspective;
Figure 3e is a top view of the flow channel plate in Figure 3a;
Figure 3f is a bottom view of the flow channel plate in Figure 3a;
Figure 4a is a schematic diagram of a microfluidic detection apparatus provided according to one embodiment of this disclosure;
Figure 4b is an exploded view of the microfluidic detection apparatus in Figure 4a;
Figure 4c is an exploded view of a microfluidic detection apparatus provided according to one embodiment of this disclosure;
Figure 4d is a partial sectional view of the microfluidic detection apparatus in Figure 4c;
Figure 4e is a schematic sectional view of a microfluidic detection apparatus provided according to one embodiment of this disclosure;
Figure 4f is an enlarged partial view of F in Figure 4e.

In the above drawings, the list of components represented by each reference number is as follows:
1000, microfluidic detection apparatus;
100, microfluidic device; 110, main body; 111, upper plate; 112, flow channel plate; 1121, first protrusion; 1122, second protrusion; 113, lower plate; 1131, first guide column; 1132, second guide column; 120, flow channel switching assembly; 121, rotating body; 122, rotating shaft; 123, sealing plate; 124, position limiting component; 130, fluid storage component; 140, membrane; 150, conductive sheet; 160, sealing sticker;
200, sensing device; 210, carrier board; 220, sensing chip; 230, probe;
300, sealing pad;
P1, first flow channel; P2, second flow channel; P21, first section of second flow channel; P22, second section of second flow channel; P23, third section of second flow channel; P3, third flow channel; P4, fourth flow channel;
C1, first flow channel port; C2, second flow channel port; C3, third flow channel port; C4, fourth flow channel port; C5, fifth flow channel port; C6, sixth flow channel port; C7, seventh flow channel port; C8, eighth flow channel port; C9, ninth flow channel port; C10, tenth flow channel port; C11, eleventh flow channel port;
B1, first liquid passing groove; B2, second liquid passing groove; B3, third liquid passing groove;
V, sliding groove; V1, first section of sliding groove; V2, second section of sliding groove; V3, third section of sliding groove;
G1, first flow channel groove; G2, second flow channel groove; G21, first section of second flow channel groove; G22, second section of second flow channel groove; G3, third flow channel groove; G31, first section of third flow channel groove; G32, second section of third flow channel groove; G33, third section of third flow channel groove; G4, fourth flow channel groove;
H1, first through hole; H2, second through hole; H3, third through hole; H4, fourth through hole; H5, fifth through hole; H6, sixth through hole;
T1, first buffer groove; T2, second buffer groove;
D1, first liquid passing port; D2, second liquid passing port;
L, liquid storage groove; R, sealed chamber; Y, ring groove;
A1, sensing area; A2, flow channel buffer area; A3, observing area.

### DESCRIPTION OF EMBODIMENTS

In order to make the above and other features and advantages of this invention clearer, this invention is further described below in conjunction with the drawings. It should be understood that the specific embodiments given herein are for the purpose of explanation to those skilled in the art, only illustrative but not restrictive.

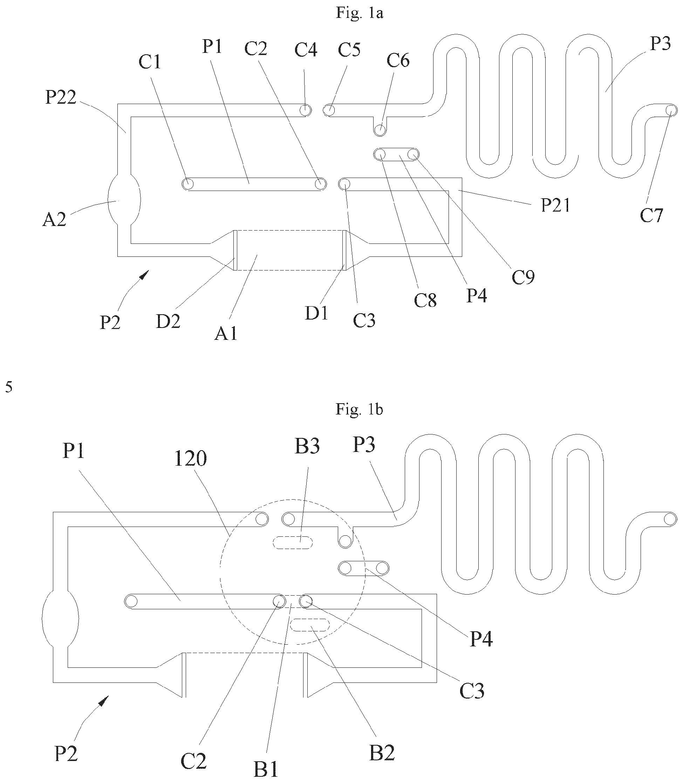

This disclosure provides a microfluidic device 100, which comprises a main body 110 and a flow channel switching assembly 120. Figure 1a is a schematic diagram of a flow channel layout inside the main body 110 provided according to one embodiment of this disclosure. Referring to Figure 1a, the main body 110 is provided with multiple flow channels. Figures 1b-1d show schematic diagrams of the connection relationships between the flow channels when the flow channel switching assembly 120 is at different rotational positions. Referring to Figures 1b-1d, the flow channel switching assembly 120 is rotatably connected to the main body 110. For example, the flow channel switching assembly 120 is provided with a shaft to achieve rotational connection with the main body 110. However, the rotational connection is not limited to this embodiment, and can be alternatively achieved with a gear.

Furthermore, the flow channel switching assembly 120 is provided with liquid passing grooves, and the liquid passing groove is used to establish communication between different flow channels. During the rotation of the flow channel switching assembly 120 relative to the main body 110, the position of the liquid passing groove changes accordingly. When the liquid passing groove is located at a specific position, different flow channels can be in communication.

In this disclosure, the multiple flow channels comprise at least a first flow channel P1, a second flow channel P2 and a third flow channel P3. The liquid passing grooves comprise a first liquid passing groove B1, a second liquid passing groove B2 and a third liquid passing groove B3.

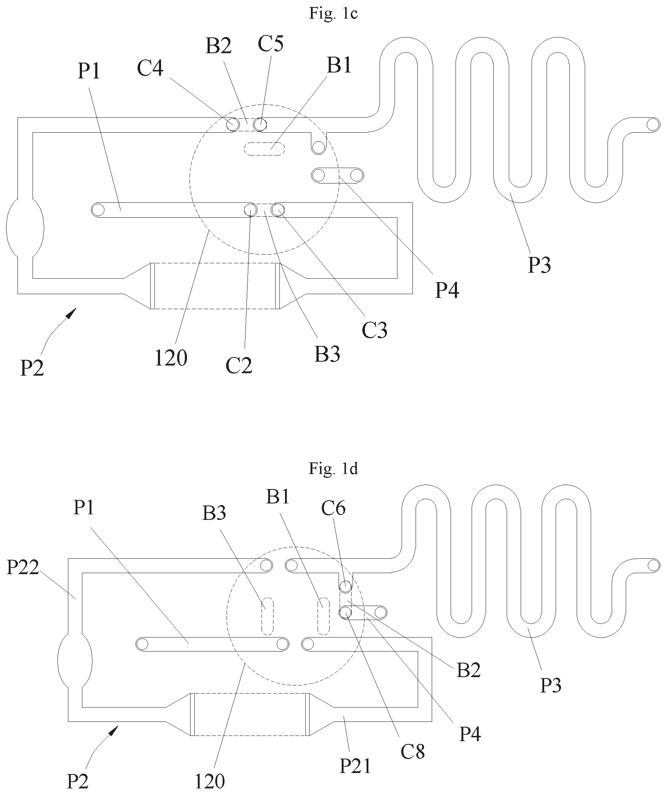

Referring to Figure 1b, when the flow channel switching assembly 120 is at a first position, the first liquid passing groove B1 establishes communication between the first flow channel P1 and the second flow channel P2. Referring to Figure 1c, when the flow channel switching assembly 120 is at a second position, the second liquid passing groove B2 establishes communication between the second flow channel P2 and the third flow channel P3, and the third liquid passing groove B3 establishes communication between the first flow channel P1 and the second flow channel P2.

Furthermore, referring to Figure 1d, the multiple flow channels also comprise a fourth flow channel P4. When the flow channel switching assembly 120 is at a third position, the second liquid passing groove B2 establishes communication between the third flow channel P3 and the fourth flow channel P4.

As can be seen from this disclosure, the number of flow channels is four and the number of liquid passing grooves is three, wherein by switching the flow channel switching assembly 120 among the first, second and third positions, the liquid passing grooves establish communication at least between two of the multiple flow channels. Of course, the number of flow channels and liquid passing grooves is not limited to this embodiment. The number of flow channels and liquid passing grooves can be adjusted according to different application scenarios. Correspondingly, the number of specific positions of the flow channel switching assembly 120 can also be adaptively adjusted, and no specific limitations are made herein.

Referring to Figures 1a-1d, in this disclosure, each flow channel comprises multiple flow channel ports. The first flow channel P1 comprises a first flow channel port C1 and a second flow channel port C2, the second flow channel P2 comprises a third flow channel port C3 and a fourth flow channel port C4, the third flow channel P3 comprises a fifth flow channel port C5 and a sixth flow channel port C6, and the fourth flow channel P4 comprises an eighth flow channel port C8 and a ninth flow channel port C9.

Furthermore, the second to sixth flow channel ports C2-C6, as well as the eighth flow channel port C8, overlap with the flow channel switching assembly 120 in a vertical direction.

As can be seen from this disclosure, at least one flow channel port of each flow channel overlaps with the flow channel switching assembly 120 in the vertical direction, so that the liquid passing groove can establish communication between different flow channels through the flow channel ports.

It should be noted that the second flow channel P2 is used to form a sensing area A1, the third flow channel P3 is used to collect fluid, and the first flow channel P1 and the fourth flow channel P4 are used to direct fluid. It should be noted that the sectional shape of the flow channel can be always consistent or change along the extension direction, and no specific limitations are made herein.

In this disclosure, the third flow channel port C3 and the fourth flow channel port C4 are both overlapped with the flow channel switching assembly 120 in the vertical direction. In other words, when the flow channel switching assembly 120 is not at the specific position, the second flow channel P2 is a closed flow channel. It can be understood that since the second flow channel P2 is a closed flow channel, air is avoided from entering the sensing area A1.

It should be noted that the third flow channel P3, as a fluid collection area, can have various structural forms. For example, the third flow channel P3 comprises a liquid storage tank for storing fluid, or the third flow channel P3 is provided with a liquid absorbing medium therein, such as absorbent cotton. In a preferred embodiment, the third flow channel P3 is a flow channel extending in a meandering manner. In the illustrated embodiment, the third flow channel P3 has a serpentine structure. However, the third flow channel P3 is not limited to this embodiment, and can also have, for example a spiral structure.

In an optional embodiment, the third flow channel P3 further comprises a seventh flow channel port C7, and the seventh flow channel port C7 is located at the side of the flow channel switching assembly 120, i.e., the seventh flow channel port C7 does not overlap with the flow channel switching assembly 120 in the vertical direction, so that the fluid collected by the third flow channel P3 can be discharged through the seventh flow channel port C7.

Referring to Figure 1b, when the flow channel switching assembly 120 is at the first position, the first liquid passing groove B1 establishes communication between the second liquid passing port C2 and the third liquid passing port C3, thereby establishing communication between the first flow channel P1 and the second flow channel P2, and the third flow channel P3 and the fourth flow channel P4 both are independent. It can be understood that in this state, a fluid can be injected from the first flow channel port C1, and flow through the first flow channel P1 into the second flow channel P2, so as to supply the fluid for the sensing area A1.

Referring to Figure 1c, when the flow channel switching assembly 120 is at the second position, the third liquid passing groove B3 establishes communication between the second liquid passing port C2 and the third liquid passing port C3, and the second liquid passing groove B2 establishes communication between the fourth liquid passing port C4 and the fifth liquid passing port C5, thereby establishing communication among the first flow channel P1, the second flow channel P2 and the third flow channel P3 in sequence, and the fourth flow channel P4 is independent. It can be understood that in this state, a fluid can be injected from the first flow channel port C1, flow through the first flow channel P1 into the second flow channel P2, and then flow from the second flow channel P2 into the third flow channel P3, and the fluid passing through the sensing area A1 can be temporarily stored in the third flow channel P3.

Referring to Figure 1d, when the flow channel switching assembly 120 is at the third position, the second liquid passing groove B2 establishes communication between the sixth liquid passing port C6 and the eighth liquid passing port C8, thereby establishing communication between the third flow channel P3 and the fourth flow channel P4, and the first flow channel P1 and the second flow channel P2 are both independent. It can be understood that in this state, the fluid collected in the third flow channel P3 can be discharged through the seventh flow channel port C7 or the ninth flow channel port C9.

As can be seen from this disclosure, the first flow channel port C1, the seventh flow channel port C7 and the ninth flow channel port C9 each serve as a liquid injection port or a liquid extraction port, thereby injecting fluid into the flow channel through liquid injection operation and discharging the fluid out of the flow channel through liquid extraction operation. The second to sixth flow channel ports C2-C6 and the eighth flow channel port C8 serve as intermediate liquid-passing flow channel ports. It should be noted that the shape of the flow channel port can be circular, square, or horn-shaped, etc. The specific shape of the flow channel port is not limited and can be adjusted according to actual needs.

It can be understood that when the flow channel switching assembly 120 is at the second position, the fluid collected in the third flow channel P3 can also be extracted through the seventh flow channel port C7. Such operation will draw air from the first flow channel P1 into the second flow channel P2, thereby introducing air into the sensing area A1 and affecting the experimental results. Therefore, after switching the flow channel switching assembly 120 to the third position, the second flow channel P2 is independent, and the fluid collected in the third flow channel P3 is discharged through the seventh flow channel port C7 or the ninth flow channel port C9. This can avoid drawing air into the second flow channel P2 and thus avoid introducing air into the sensing area A1.

In summary, in this disclosure, functions of switching between and opening/closing of multiple flow channels can be achieved solely through the flow channel switching assembly 120, featuring a simplified structure, user-friendly operation, and low cost. In addition, users can adjust the position of the liquid passing groove through the flow channel switching assembly 120 according to different situations, establishing communication between different flow channels in the main body 110 to adapt to different usage scenarios, and the function is relatively complete.

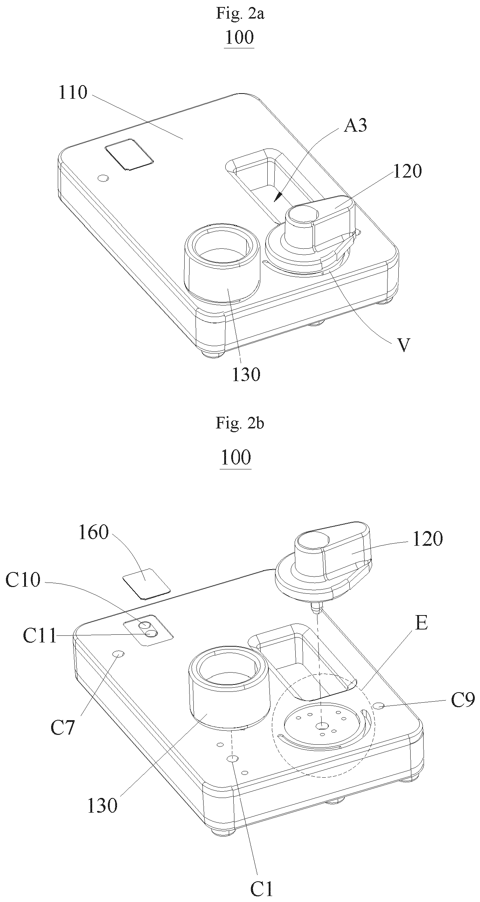

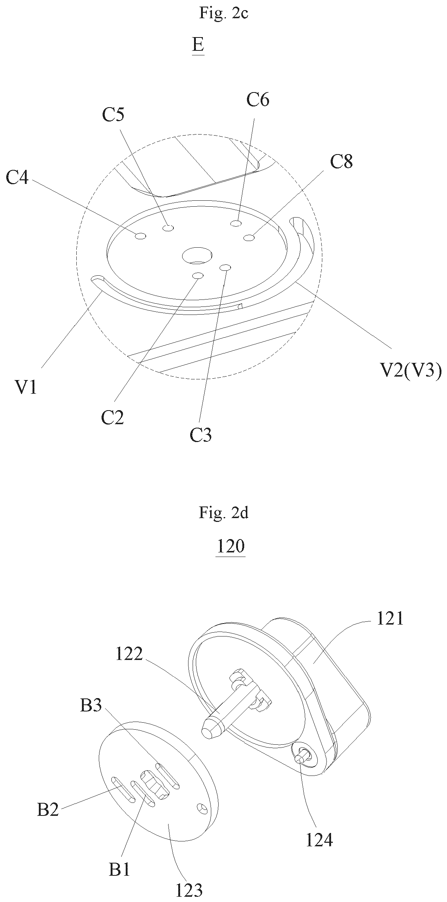

Figure 2a is a schematic diagram of a microfluidic device 100 provided according to one embodiment of this disclosure. Figure 2d is an exploded view of the flow channel switching assembly 120 in Figure 2a. Referring to Figure 2d, the flow channel switching assembly 120 comprises a rotating body 121, a rotating shaft 122, a sealing plate 123 and a position limiting component 124, wherein the rotating shaft 122 and the position limiting component 124 are both connected to the rotating body 121, and the rotating body 121 is rotatably connected to the main body 110 through the rotating shaft 122. Correspondingly, the position limiting component 124 is rotatable with the rotating body 121.

In this disclosure, the sealing plate 123 is connected to the rotating body 121, and thus can also rotate with the rotating body 121. In specific applications, the sealing plate 123 is penetrated by the rotating shaft 122 and then fitted to the rotating body 121. The sealing plate 123 can be fitted to the rotating body 121 by means of hot melt, ultrasonic welding, laser welding, adhesive bonding, etc. It should be noted that an upper surface of the sealing plate 123 is fitted to the rotating body 121, a lower surface is fitted to the main body 110, and the flow channel ports are sealed through the lower surface, the sealing plate 123 is thereby located between the rotating body 121 and the main body 110.

In this disclosure, the first to third liquid passing grooves B1-B3 are all provided on the sealing plate 123. During the rotation of the sealing plate 123 with the rotating body 121, the position of each liquid passing groove can be adjusted to connect different flow channels. In specific applications, the liquid passing grooves are all strip-shaped grooves, and their size and layout are suitable for the flow channel ports to facilitate the communication between different flow channels. Of course, no specific limitations are made to the shape of the liquid passing groove in this disclosure, and it is sufficient to ensure that the flow channel ports of different flow channels can be in communication.

Figure 2b is an exploded view of the microfluidic device 100 in Figure 2a. Figure 2c is an enlarged partial view of E in Figure 2b. Furthermore, in this disclosure, the main body 1 is provided with a sliding groove V. After the rotating body 121 is connected to the main body 1, at least a portion of the position limiting component 124 is embedded in the sliding groove V. During the rotation of the flow channel switching assembly 120 relative to the main body 110, the position limiting component 124 slides along the sliding groove V.

In specific applications, in order to adapt to the movement trajectory of the position limiting component 124, the sliding groove V is a circular arc-shaped strip groove. It can be understood that the cooperation between the position limiting component 124 and the sliding groove V limits the rotation angle of the flow channel switching assembly 120 relative to the main body 110, so that the flow channel switching assembly 120 can only be switched among the first position, the second position and the third position.

In this disclosure, the sliding groove V comprises a first section of sliding groove V1, a second section of sliding groove V2 and a third section of sliding groove V3. The position limiting component 124 is configured to slide along the first section of sliding groove V1 to the first position, slide along the second section of sliding groove V2 to the third position, and slide along the third section of sliding groove V3 to rotate to the second position.

In an optional embodiment, the position limiting component 124 is a position limiting peg, and a bottom end of the position limiting peg extends into the sliding groove V. Bottom walls of the first section of sliding groove V1, the second section of sliding groove V2 and the third section of sliding groove V3 each are provided with one shallow pit thereon. During the rotation of the flow channel switching assembly 120, the bottom end of the position limiting peg can be embedded into the shallow pit of any section of the sliding groove, thereby forming a stagnation during the rotation to determine that the rotation is in place. Of course, the depth of the shallow pit should be appropriate, ensuring that the position limiting peg can be moved out of the shallow pit to move towards another section of the sliding groove under increased rotational torque.

Referring to Figure 2c, in this disclosure, a groove depth of the second section of sliding groove V2 is equal to a groove depth of the third section of sliding groove V3, and the groove depths of the second section of sliding groove V2 and the third section of sliding groove V3 are greater than a groove depth of the first section of sliding groove V1. In other words, the sliding groove V is formed by splicing two sliding groove segments with different groove depths. The two ends of the sliding groove V correspond to the first and second positions respectively, and the junction between the two sliding groove segments corresponds to the third position. Therefore, the structural characteristics of the sliding groove V itself are used to limit the rotational position of the flow channel switching assembly 120.

In an optional embodiment, the position limiting component 124 is a pre-compressed spring pin, and the extension length of the pre-compressed spring pin can adaptively extend and retract with the change of the groove depth. For the convenience of understanding and explaining this embodiment, the sliding groove segment formed by splicing the second section of sliding groove V2 and the third section of sliding groove V3 is named as a merged sliding groove segment, and the groove depth of the merged sliding groove segment is greater than the groove depth of the first section of sliding groove V1. When the pre-compressed spring pin is located at the end of the first section of sliding groove V1, the flow channel switching assembly 120 is at the first position. When the pre-compressed spring pin moves away from the first section of sliding groove V1 and is located at the junction between the first section of sliding groove V1 and the merged sliding groove segment, the pre-compressed spring pin extends outward, and the flow channel switching assembly 120 is at the third position. When the pre-compressed spring pin moves to the end of the merged sliding groove segment, the flow channel switching assembly 120 is at the second position.

In a preferred embodiment, the groove depth difference between the first section of sliding groove V1 and the merged sliding groove segment is large enough. In the case where the pre-compressed spring pin moves away from the first section of sliding groove V1, and the extension length of the pre-compressed spring pin is long enough, the pre-compressed spring pin cannot slide from the merged sliding groove segment back to the first section of sliding groove V1. Therefore, in this embodiment, when the position limiting component 124 is located in the second section of sliding groove V2 or the third section of sliding groove V3, it cannot slide to the first section of sliding groove V1.

It should be noted that the structure that prevents the position limiting component 124 from sliding back to the first section of sliding groove V1 is not limited to this embodiment. For example, the position limiting component 124 is a pre-compressed spring pin, the groove depths of the first section of sliding groove V1, the second section of sliding groove V2 and the third section of sliding groove V3 are the same, and the bottom wall at the junction between the first section of sliding groove V1 and other section of the sliding groove is provided with a wedge-shaped protruding part that extends upward, wherein the wedge-shaped protruding part is configured to allow the pre-compressed spring pin to slide out of the first section of sliding groove V1 and prohibit it from sliding into the first section of sliding groove V1 from other section of the sliding groove.

Referring to Figures 2b and 2c, in the illustrated embodiment, the position limiting component 124 is a pre-compressed spring pin, the sliding groove V is a semi-circular arc, and the first section of sliding groove V1 and the merged sliding groove segment each occupy half of the semi-circular arc. The flow channel switching assembly 120 allows for a rotation angle of 0 ° to 180 °. It should be noted that when the pre-compressed spring pin is located at the end of the first section of sliding groove V1, the rotation angle of the flow channel switching assembly 120 is 0 °, which corresponds to the first position. As the flow channel switching assembly 120 is rotated counterclockwise by 90 °, the rotation angle of the flow channel switching assembly 120 is 90 °, and the pre-compressed spring pin extends outward and is located at the junction between the first section of sliding groove V1 and the merged sliding groove segment, which corresponds to the third position. As the flow channel switching assembly 120 is further rotated counterclockwise by 90 °, the rotation angle of the flow channel switching assembly 120 is 180 °, and the pre-compressed spring pin is located at the end of the merged sliding groove segment, which corresponds to the second position, wherein Figure 2a shows the schematic diagram of the flow channel switching assembly 120 in the second position. It should be noted that due to the large groove depth difference between the first section of sliding groove V1 and the merged sliding groove segment, a step that prevents the movement of the pre-compressed spring pin is formed. After the pre-compressed spring pin slides into the merged sliding groove segment, it cannot slide back to the first section of sliding groove V1.

Of course, the rotation angle range and limiting positions of the flow channel switching assembly 120 are not limited to the illustrated embodiment. The rotation angle range and limiting positions can be adjusted correspondingly by adjusting the arc length of the sliding groove V and the proportion of each section of the sliding groove.

In summary, in this disclosure, the flow channel switching assembly 120 is essentially a three position valve that, in cooperation with the sliding groove V, switches between the first position, the second position and the third position, thereby achieving the purpose of controlling the opening/closing of the four flow channels.

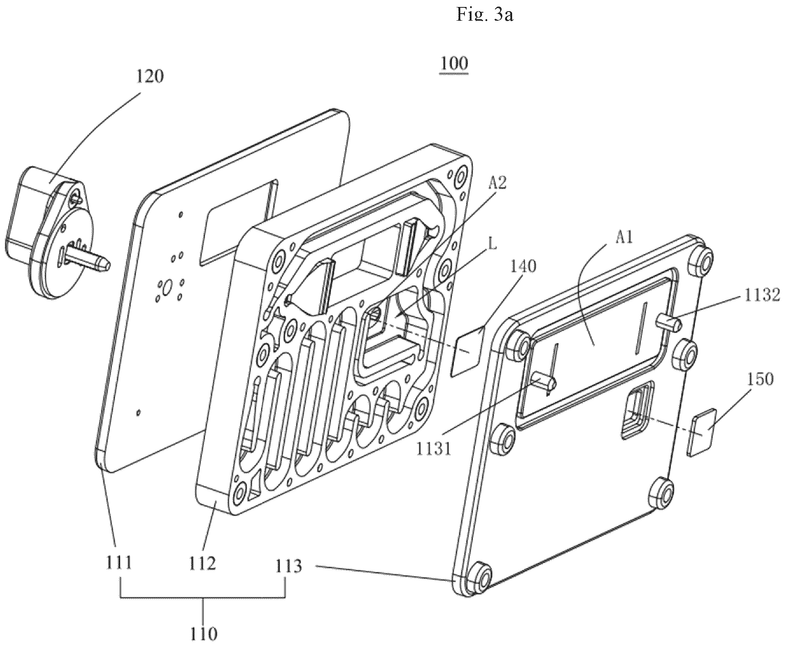

Figure 3a is an exploded view of a microfluidic device 100 provided according to one embodiment of this invention. Referring to Figure 3a, in the illustrated embodiment, the main body 110 has a multi-plate assembled structure and comprises an upper plate 111, a flow channel plate 112 and a lower plate 113. Specifically, the upper plate 111, the flow channel plate 112 and the lower plate 113 are assembled from top to bottom to form the main body 110. In specific applications, each plate can be assembled through processes such as bonding, ultrasonic welding, laser welding, or adhesive bonding.

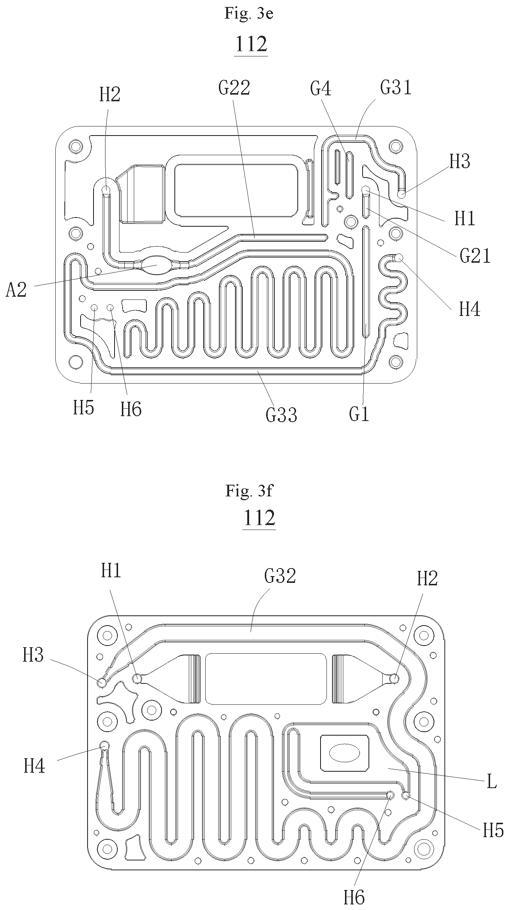

Figure 3e is a top view of the flow channel plate 112 in Figure 3a. Figure 3f is a bottom view of the flow channel plate 112 in Figure 3a. Referring to Figures 3e and 3f, the upper and lower surfaces of the flow channel plate 112 are both provided with flow channel grooves. The upper plate 111 and the lower plate 113 are respectively connected to the upper and lower surfaces of the flow channel plate 112, thereby covering the flow channel grooves to form multiple flow channels. It can be understood that multiple flow channels are arranged on the upper and lower sides of the flow channel plate 112, thereby forming a double-layer flow channel structure, which greatly reduces the occupied space of the microfluidic device 100 and achieves the goal of miniaturization.

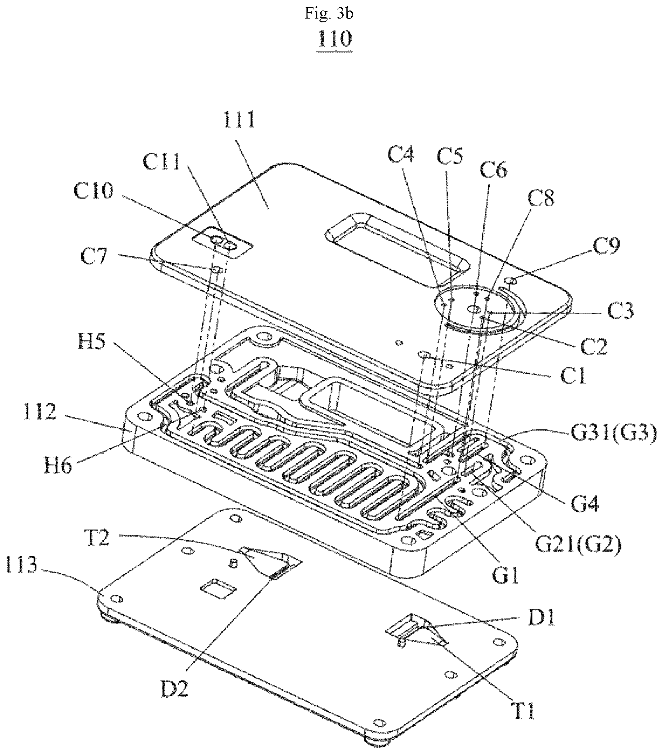

Figure 3b is an exploded view of the main body 110 in Figure 3a from another perspective. Referring to Figure 3b, in this disclosure, the flow channel plate 112 is provided with a first flow channel groove G1, a second flow channel groove G2, a third flow channel groove G3 and a fourth flow channel groove G4. The first flow channel groove G1 is used to form the first flow channel P1, the second flow channel groove G2 is used to form the second flow channel P2, the third flow channel groove G3 is used to form the third flow channel P3, and the fourth flow channel groove G4 is used to form the fourth flow channel P4.

Referring to Figure 3e, the upper surface of the flow channel plate 112 is provided with the first flow channel groove G1 and the fourth flow channel groove G4 thereon. Referring to Figure 3b, the upper plate 111 is provided with the first to ninth flow channel ports C1-C9. The first flow channel port C1 and the second flow channel port C2 are in communication with the first flow channel groove G1, thereby forming the first flow channel P1 when the upper plate 111 covers the flow channel plate 112. The eighth flow channel port C8 and the ninth flow channel port C9 are in communication with the fourth flow channel groove G4, thereby forming the fourth flow channel P4 when the upper plate 111 covers the flow channel plate 112. Therefore, the first flow channel groove G1 and the fourth flow channel groove G4 together with the upper plate 111 form the first flow channel P1 and the fourth flow channel P4.

As can be seen from this disclosure, the first flow channel groove G1 and the fourth flow channel groove G4 each are a single flow channel groove segment. Of course, the first flow channel groove G1 and the fourth flow channel groove G4 can also be composed of multiple flow channel groove segments. In addition, the first flow channel groove G1 and the fourth flow channel groove G4 can also be provided on the lower surface of the flow channel plate 112, no specific limitations are made in this disclosure.

Referring to Figures 3e and 3f, in this disclosure, the third flow channel groove G3 comprises a first section of third flow channel groove G31, a second section of third flow channel groove G32 and a third section of third flow channel groove G33. The first section of third flow channel groove G31 and the third section of third flow channel groove G33 are arranged on the upper surface of the flow channel plate 112, and the second section of third flow channel groove G32 is arranged on the lower surface of the flow channel plate 112. In conjunction with Figure 3b, it can be seen that the fifth flow channel port C5 and the sixth flow channel port C6 are in communication with the first section of third flow channel groove G31, and the seventh flow channel port C7 is in communication with the third section of third flow channel groove G33.

Furthermore, the flow channel plate 112 is provided with a third through hole H3 and a fourth through hole H4. The third through hole H3 and the fourth through hole H4 are respectively located at both ends of the second section of third flow channel groove G32, and are respectively in communication with the first section of third flow channel groove G31 and the third section of third flow channel groove G33. In this way, the first section of third flow channel groove G31, the second section of third flow channel groove G32, and the third section of third flow channel groove G33 are sequentially in communication, thereby forming the third flow channel groove G3, and thus forming the third flow channel P3 when the upper plate 111 and the lower plate 113 cover the upper and lower surfaces of the flow channel plate 112, respectively.

As can be seen from this disclosure, the third flow channel groove G3 is formed by sequentially connecting three flow channel groove segments in series. It can be understood that the structural form and arrangement position of the third flow channel groove G3 can be adjusted by increasing the number of flow channel groove segments and through holes, and no specific limitations are made herein.

As mentioned previously, in an optional embodiment, the third flow channel P3 is a flow channel extending in a meandering manner, to facilitate fluid collection. It can be understood that the third flow channel P3 occupies a relatively large space, and thus the third flow channel P3 is arranged on the upper and lower sides of the flow channel plate 112, so that the third flow channel P3 has a stacked arrangement structure, which is conducive to miniaturization.

Referring to Figure 3b, the lower plate 113 is provided with a first buffer groove T1 and a second buffer groove T2. The first buffer groove T1 is provided with a first liquid passing port D1 therethrough, and the second buffer groove T2 is provided with a second liquid passing port D2 therethrough.

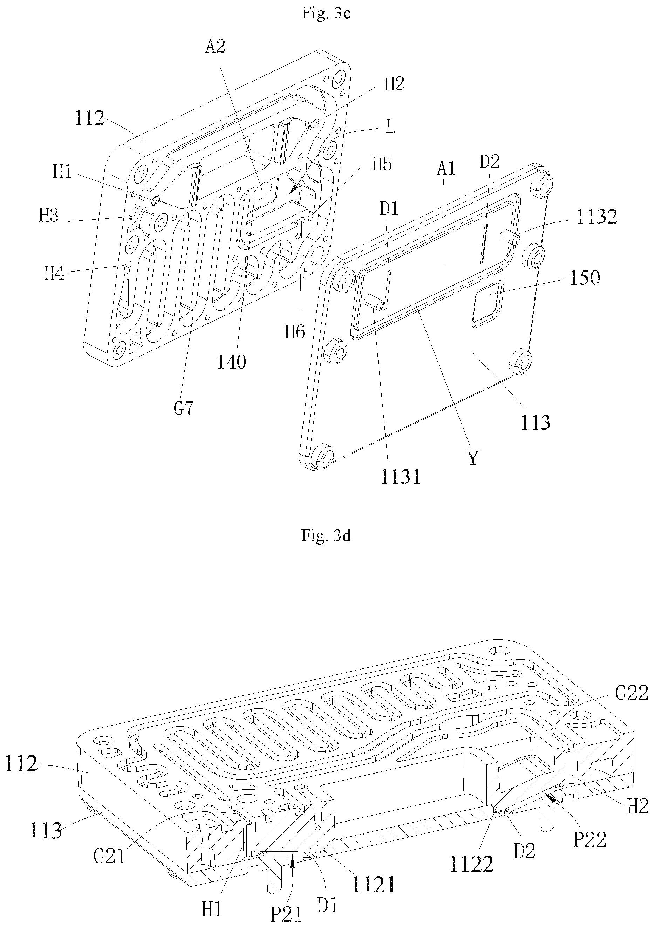

Referring to Figures 3e and 3f, the second flow channel groove G2 comprises a first section of second flow channel groove G21, and the first section of second flow channel groove G21 is provided on the upper surface of the flow channel plate 112. The flow channel plate 112 is provided with a first through hole H1, and the first through hole H1 is located at the end of the first section of second flow channel groove G21. According to Figure 3b, it can be seen that the third flow channel port C3 is in communication with the first section of second flow channel groove G21. Figure 3c is an exploded view of the flow channel plate 112 and the lower plate 113 in Figure 3a from another perspective. In conjunction with Figure 3c, it can be seen that the first through hole H1 establishes communication between the first section of second flow channel G21 and the first buffer groove T1, to form a first section of second flow channel P21 when the upper plate 111 and the lower plate 113 cover the upper and lower surfaces of the flow channel plate 112, respectively.

Referring to Figures 3e and 3f, the second flow channel groove G2 also comprises a second section of second flow channel groove G22, and the second section of second flow channel groove G22 is provided on the upper surface of the flow channel plate 112. The flow channel plate 112 is also provided with a second through hole H2, and the second through hole H2 is located at the end of the second section of second flow channel groove G22. In conjunction with Figure 3b, it can be seen that the fourth flow channel port C4 is in communication with the second section of second flow channel groove G22. In conjunction with Figure 3c, it can be seen that the second through hole H2 establishes communication between the second section of second flow channel G22 and the second buffer groove T2, to form a second section of second flow channel P22 when the upper plate 111 and the lower plate 113 cover the upper and lower surfaces of the flow channel plate 112, respectively.

It can be understood that the first section of second flow channel P21 and the second section of second flow channel P22 can be in communication with each other through the first liquid passing port D1 and the second liquid passing port D2.

Furthermore, in this disclosure, the shape of the first buffer groove T1 gradually expands from the side away from the first liquid passing port D1 towards the side close to the first liquid passing port D1; the shape of the second buffer groove T2 gradually expands from the side away from the second liquid passing port D2 towards the side close to the second liquid passing port D2. In other words, the groove width at the side close to the liquid passing port is greater than the groove width at the side away from the liquid passing port, so that the flow velocity of the fluid flowing out through the first liquid passing port D1 in the main body 110 gradually decreases, and the flow velocity of the fluid entering the main body 110 through the second liquid passing port D2 gradually increases. Referring to Figure 3b, in the illustrated embodiment, the first buffer groove T1 and the second buffer groove T2 have an overall isosceles trapezoidal shape, but their shape is not limited to this embodiment, for example, they can be semi-circular in shape.

Furthermore, in this disclosure, a bottom surface of the first buffer groove T1 is inclined downwards from the side away from the first liquid passing port D1 towards the side close to the first liquid passing port D1; a bottom surface of the second buffer groove T2 is inclined downwards from the side away from the second liquid passing port D2 towards the side close to the second liquid passing port D2. In other words, the bottom surface of the buffer groove is a bevel, which avoids the formation of a right angle corner at the junction between the through hole and the buffer groove, thereby preventing fluid accumulation at the right angle corner and ensuring smooth fluid flow. Of course, the bevel structure also avoids excessive elevation difference and reduces the risk of bubble formation.

Figure 3d is a sectional view of the flow channel plate 112 and the lower plate 113 in Figure 3a from another perspective. Referring to Figure 3c and Figure 3d, in specific applications, the flow channel plate 112 is provided with protrusions extending downward, and the protrusions comprise a first protrusion 1121 and a second protrusion 1122. The first protrusion 1121 and the second protrusion 1122 each are provided with a bevel and embedded into the first buffer groove T1 and the second buffer groove T2, respectively, thereby forming inclined flow channel segments. In other words, the first section of second flow channel P21 and the second section of second flow channel P22 each comprise an inclined flow channel segment, so that excessive elevation difference can be avoided to prevent fluid accumulation during the fluid's descent or ascent, ensuring unimpeded flow.

Referring to Figure 2a, in an optional embodiment, the main body 110 is provided with a transparent observing area A3, and the observing area A3 is located above the second flow channel P2. In specific applications, the projection of the sensing area A3 in the vertical direction covers the first liquid passing port D1 and the second liquid passing port D2, in order to observe the situation at the sensing area A1. Referring to Figure 2a and Figure 3a, in practical applications, the upper plate 111 and the flow channel plate 112 are each provided with an opening at the projection area of the observing area A3 on the upper plate 111 and the flow channel plate 112, and the lower plate 113 is provided with a transparent area at the projection area of the observing area A3 on the lower plate 113, or the entire lower plate 113 is made of transparent material (such as transparent acrylic sheet, etc.). In this way, the observing area A3 is formed to facilitate the viewing of the sensing area A1.

Referring to Figures 2a and 2b, in an optional embodiment, the microfluidic device 100 further comprises a fluid storage component 130, and the fluid storage component 130 is connected to the main body 110 and in communication with the first flow channel port C1. In this embodiment, the first flow channel port C1 serves as the liquid injection port, a liquid collection chamber is provided inside the fluid storage component 130, the top end of which is provided with an opening, and the bottom end of which is connected to the upper plate 111 and in communication with the first flow channel port C1, the fluid storage component 130 is used for temporarily storing the fluid to be injected. In this embodiment, the liquid collection chamber of the fluid storage component 130 is wide at the top and narrow at the bottom to facilitate fluid flow towards the first flow channel port C1. Preferably, the fluid storage component 130 is detachably connected to the main body 110. In specific applications, the bottom end of the fluid storage component 130 abuts the upper plate 111 and is provided with an opening to dock with the first flow channel port C1, and the upper plate 111 supports and stabilizes the fluid storage component 130, to ensure that no leakage occurs during the liquid injection process. In this way, a detachable connection is achieved for easy replacement.

Referring to Figure 1a, the second flow channel P2 is provided with a flow channel buffer area A2, and the shape of the flow channel buffer area A2 first gradually increases and then gradually decreases along the extension direction of the second flow channel P2. In the illustrated embodiment, the flow channel buffer area A2 is located between the sensing area A1 and the fourth flow channel port C4, and when the first flow channel port C1 is used as the liquid injection port, the flow channel buffer area A2 is located downstream of the sensing area A1. Of course, the flow channel buffer area A2 can also be provided between the sensing area A1 and the third flow channel port C3, and in this condition, the flow channel buffer area A2 is located upstream of the sensing area A1. In other words, the flow channel buffer area A2 can be located upstream or downstream of the sensing area A1, and no specific limitations are made herein.

Furthermore, in this disclosure, the main body 110 is also provided with a sealed chamber R which is located below the second flow channel P2. Preferably, the sealed chamber R is located below the flow channel buffer area A2. In specific applications, the microfluidic device 100 further comprises a membrane 140 and a conductive sheet 150. The membrane 140 is provided between the sealed chamber R and the flow channel buffer area A2, the sealed chamber R is separated from the flow channel buffer area A2 by the membrane 140. The membrane 140 is configured to allow ion transfer between the fluid in the sealed chamber R and the fluid in the flow channel buffer area A2, such that the fluid at the flow channel buffer area A2 can only exchange ions with the fluid in the sealed chamber R, wherein the conductive sheet 150 is located below the membrane 140 for transmitting signals generated by ion exchange.

It should be noted that the membrane 140 adopts a high permeability membrane or a semipermeable membrane, such as an ion exchange membrane, a proton exchange membrane, etc. The membrane can be made according to actual functional requirements, and no specific limitations are made herein.

It can be understood that the groove width at the flow channel buffer area A2 increases, which reduces the flow velocity of the fluid passing through the flow channel buffer area A2, thereby facilitating ion exchange between the fluid in the flow channel and the fluid in the sealed chamber R through the membrane 140.

Referring to Figures 3a and 3c, in this disclosure, a liquid storage groove L is provided on the lower surface of the flow channel plate 112. The flow channel buffer area A2 is located in the second section of second flow channel groove G22 and is in communication with the liquid storage groove L. The liquid storage groove L is closed by the membrane 140 and the lower plate 113, thereby forming the sealed chamber R. In specific applications, the bottom wall of the second section of second flow channel groove G22 is formed with a through opening at the corresponding position of the flow channel buffer area A2, to establish communication with the liquid storage groove L, and the membrane 140 seals and fits to the through opening. As can be seen from this disclosure, the membrane 140 is located between the liquid storage groove L and the flow channel buffer area A2 to separate the sealed chamber R from the second section of second flow channel groove G22.

Furthermore, the lower plate 113 is provided with the conductive sheet 150 at the overlapping position with the liquid storage groove L in the vertical direction. The conductive sheet 150 and the membrane 140 can be wetted by the fluid located in the sealed chamber R. The signal generated during the ion exchange between the fluid in the sealed chamber R and the fluid at the flow channel buffer area A2 can be transmitted outward through the conductive sheet 150.

Referring to Figure 3a, in specific applications, the lower plate 113 is provided with an opening for installing the conductive sheet 150, and the opening overlaps with the liquid storage groove L in the vertical direction, that is, the opening is in communication with the liquid storage groove L and sealed by the conductive sheet 150. The conductive sheet 150 can be made of conductive metal sheet, and its shape is not specifically limited herein.

Referring to Figures 3b and 3c, the upper plate 111 is also provided with a tenth flow channel port C10 and an eleventh flow channel port C11. The flow channel plate 112 is also provided with a fifth through hole H5 and a sixth through hole H6. The tenth flow channel port C10 is in communication with the liquid passing groove L through the fifth through hole H5, and the eleventh flow channel port C11 is in communication with the liquid passing groove L through the sixth through hole H6. In other words, both the tenth flow channel port C10 and the eleventh flow channel port C11 are in communication with the sealed chamber R. It can be understood that a detection liquid is injected into the sealed chamber R through one of the tenth flow channel port C10 and the eleventh flow channel port C11, and the other is used to discharge the air in the sealed chamber R, in order to ensure the smooth injection of the detection liquid into the sealed chamber. It can be seen that the tenth flow channel port C10 and the eleventh flow channel port C11 are used to inject the detection liquid.

Referring to Figure 2b, in an optional embodiment, the microfluidic device 100 further comprises a sealing sticker 160. After completing the injection of liquid into the sealed chamber R, the tenth flow channel port C10 and the eleventh flow channel port C11 are covered with the sealing sticker 160 to prevent leakage of the detection liquid in the sealed chamber R.

It should be noted that in the above embodiment, the sealed chamber R is formed by the cooperation of the liquid storage groove L with the membrane 140 and the lower plate 113. Of course, the sealed chamber R is not limited to this embodiment. For example, the sealed chamber R is formed in a sealed container with the membrane 140 and the conductive sheet 150, and the sealed container is embedded in the main body 110 and even detachably connected to the main body 110. It can be seen that the structural form and shape of the sealed chamber R can be diverse, and no specific limitations are made herein.

It should be noted that in this disclosure, the main body 110 has an assembled structure with three plate-like members stacked in the vertical direction, but it is not limited to this embodiment. For example, in an optional embodiment, the main body 110 with various flow channels and the liquid storage groove L is made by a one-piece molding process, such as through 3D printing; then the membrane 140 and the conductive sheet 150 are assembled and seal the liquid storage groove L to form the sealed chamber R, and then the flow channel switching assembly 120, the fluid storage component 130 and the sealing sticker 160 are assembled. It can be understood that the production cost is relatively high under this method, and in particular it is difficult to assembly the membrane 140. Alternatively, in another optional embodiment, the flow channel plate 112 and the upper plate 111 or the lower plate 113 are made by a one-piece molding process, and the main body 110 is made by assembling two plate structures, to avoid the difficulty of assembling the membrane 140, but its production cost is relatively high. It can be seen that the structure of the main body 110 is not limited to this embodiment and is not specifically limited herein.

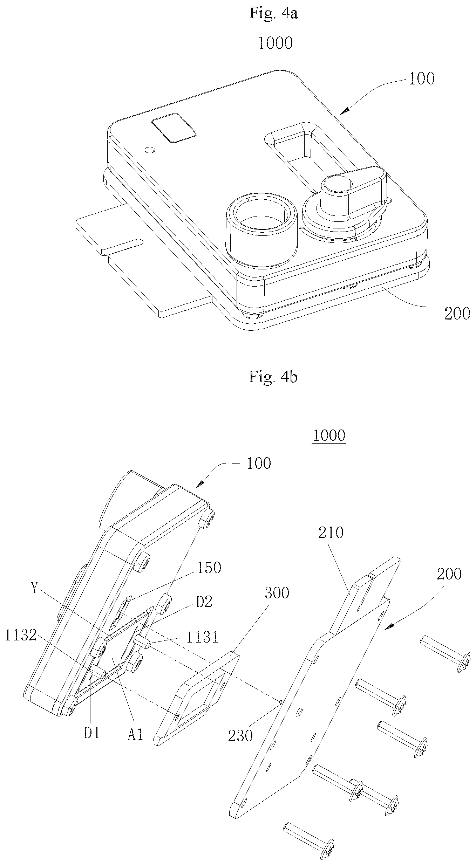

Figure 4a is a schematic diagram of a microfluidic detection apparatus 1000 provided according to one embodiment of this disclosure. Referring to Figure 4a, the microfluidic detection apparatus 1000 comprises the aforementioned microfluidic device 100 and a sensing device 200.

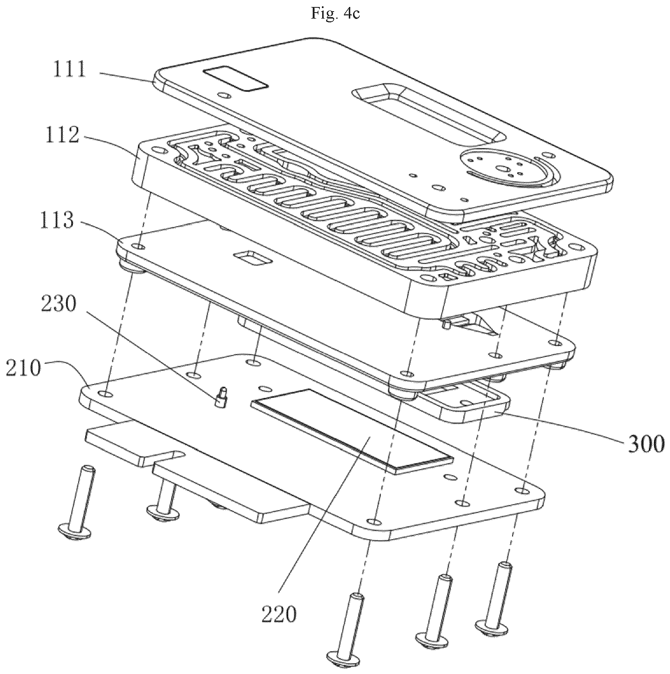

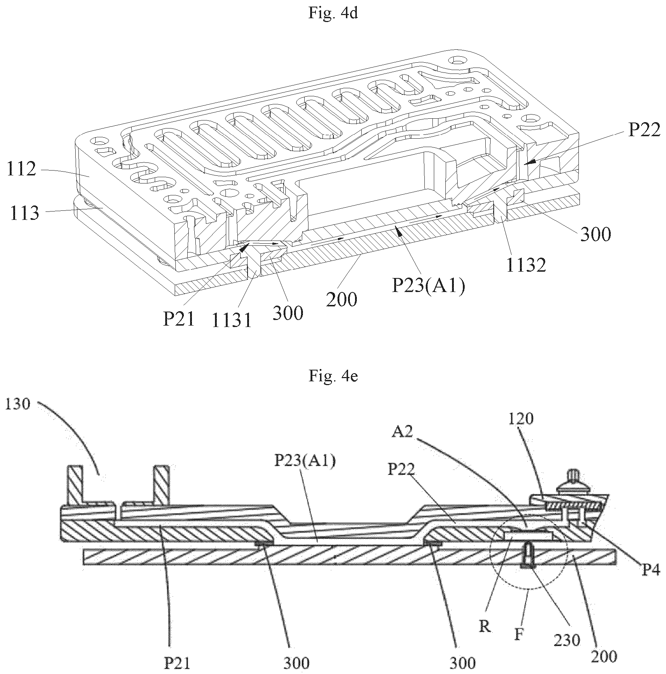

Figure 4b is an exploded view of the microfluidic detection apparatus 1000 in Figure 4a. Referring to Figure 4b, the sensing device 200 is connected to the main body 110, and the projection of the sensing device 200 in the vertical direction covers the first liquid passing port D1 and the second liquid passing port D2. Figure 4d is a partial sectional view of the microfluidic detection apparatus in Figure 4c, and for ease of viewing, the upper plate 111 is removed in Figure 4d. The sensing device 200 is connected to the main body 110 to form a third section of second flow channel P23. The third section of second flow channel P23 is in communication with the first section of second flow channel P21 and the second section of second flow channel P22 through the first liquid passing port D1 and the second liquid passing port D2, respectively, thereby forming the second flow channel P2. In this disclosure, the position of the third section of second flow channel P23 corresponds to the sensing area A1, and the projection of the sensing area A1 in the vertical direction covers the first liquid passing port D1 and the second liquid passing port D2.

Referring to Figure 4b, in this disclosure, the sensing device 200 is connected to the microfluidic device 100 through screws. However, the connection is not limited to this embodiment, for example, the connection can also be made by a latch, a bolt-nut cooperation, etc.

It should be noted that in the above, the first flow channel port C1 serves as the liquid injection port and its projection in the vertical direction does not overlap with the flow channel switching assembly 120. Therefore, the first flow channel port C1 is located at the side of the flow channel switching assembly 120, and correspondingly, the fluid storage component 130 is located at the side of the flow channel switching assembly 120 with an interval between them.

It should be noted that in the case where there is a liquid injection port above the sensing area A1, the descent flow channel for introducing fluid into the sensing area A1 is relatively short and it is easy to introduce bubbles. It can be understood that the first flow channel port C1 is not located above the sensing area A1, to reduce the risk of introducing bubbles. In addition, the flow channel switching assembly 120 is not located above the sensing area A1, to facilitate observation through the observing area A3. In this disclosure, the fluid storage component 130 and the flow channel switching assembly 120 are located at the same side or adjacent sides of the sensing area A1, thereby ensuring that the projection of the first flow channel port C1 and the flow channel switching assembly 120 in the vertical direction does not overlap with the sensing area A1. Of course, this layout is also conducive to miniaturization of the design.

Referring to Figure 4b, in this disclosure, the microfluidic detection apparatus 1000 further comprises a sealing pad 300, and the sealing pad 300 is arranged between the sensing device 200 and the main body 110. The sealing pad 300 is arranged around the sensing area A1, i.e., around the third section of second flow channel P23, thereby sealing the third section of second flow channel P23 and preventing fluid leakage between the microfluidic device 100 and the sensing device 200.

It can be understood that since the sealing pad 300 is arranged around the sensing area A1, in an optional embodiment, the sealing pad 300 has a ring-shaped structure. Of course, the shape of the sealing pad 300 is not limited to this embodiment. For example, the sealing pad 300 is formed by splicing two semi-ring structures, which ensures that there is no liquid leakage.

Figure 4c is an exploded view of a microfluidic detection apparatus 1000 provided according to one embodiment of this disclosure. Referring to Figure 4c, in this disclosure, the sensing device 200 comprises a carrier board 210, a sensing chip 220 and a probe 230. The sensing chip 220 is located at the sensing area A1. In specific applications, the sensing chip 220, the sealing pad 300 and the microfluidic device 100 collectively form the third section of second flow channel P23. The sensing chip 220 can be wetted by the fluid passing through the third section of second flow channel P23.

As mentioned previously, the sealing pad 300 has a ring-shaped structure, and thus is formed with a sealing pad opening. The upper surface of the sensing chip 220 can be embedded in the sealing pad opening, thereby coming into contact with the fluid in the third section of second flow channel P23.

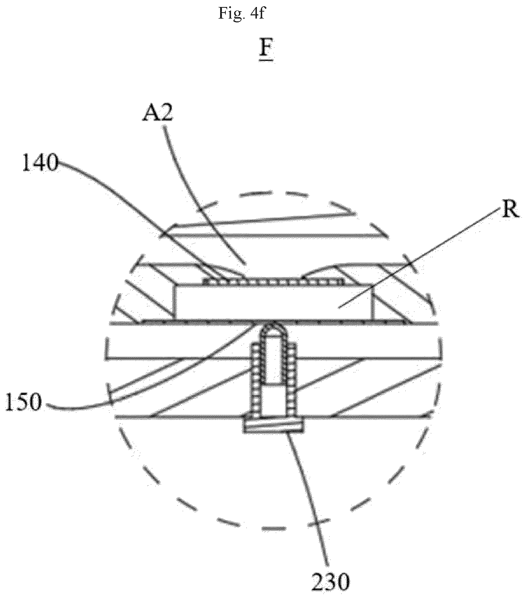

Referring to Figure 4c, furthermore, the probe 230 is connected to the carrier board 210, and the top end of the probe 230 abuts the conductive sheet 150. Figure 4e is a schematic sectional view of a microfluidic detection apparatus 1000 provided according to one embodiment of this invention. Figure 4e is not a sectional view of an actual product, but only a schematic diagram to illustrate the relationship between the sensing area A1, the flow channel buffer area A2 and the sealed chamber R. Figure 4f is an enlarged partial view of F in Figure 4e.

Referring to Figures 4e and 4f, the sensing area A1 and the flow channel buffer area A2 are both located in the second flow channel P2. It can be understood that the sensing chip 220 located at the sensing area A1 and the membrane 140 located at the flow channel buffer area A2 can be wetted by the fluid passing through the second flow channel P2. As mentioned previously, the signal generated by ion exchange between the detection liquid in the sealed chamber R and the fluid in the second flow channel P2 is transmitted to the carrier plate 210 through the conductive sheet 150 and the probe 230. In addition, the signal formed by the sensing chip 220 is transmitted to the carrier board 210. Therefore, the signal generated by means of the detection from the sensing device 200 is transmitted outward through the carrier board 210, for example, collected by a signal acquisition and analysis instrument, thereby completing detection and analysis.

It should be noted that the form of the probe 230 can be diverse, as long as it can be electrically connected to the conductive sheet 150, for example, it can also be an electrode. The carrier board 210 can be a PCB board, which ensures signal transmission with the sensing chip 220 and the probe 230. The sensing chip 220 can be a biochip, and integrated onto the carrier board 210 to form the body portion of the sensing device 200.

As mentioned previously, in a preferred embodiment, the flow channel plate 112 is provided with the first buffer groove T1 and the second buffer groove T2. The buffer groove structure avoids the flow velocity of the fluid flowing into the sensing area A1 from being too fast, ensuring the appropriate contact time between the fluid and the sensing chip 220, while avoiding the generation of bubbles.

Furthermore, in this disclosure, the main body 110 is provided with a ring groove Y arranged around the sensing area A1, and at least a portion of the sealing pad 300 is embedded in the ring groove Y. Specifically, in the process of installing the sensing device 200 onto the microfluidic device 100, the sealing pad 300 is first installed in the ring groove Y for pre-fixation, and then the sensing device 200 is installed, which is convenient for installation. It can be understood that since the sliding groove Y is arranged around the sensing area A1, the sealing pad 300 installed in the ring groove Y is also arranged around the sensing area A1.

Furthermore, in this disclosure, the main body 110 is also provided with multiple guide columns extending downward, the multiple guide columns are located in the area enclosed by the ring groove Y, and the sealing pad 300 is connected to the guide columns. Referring to Figure 4b, in practical applications, the guide columns are provided on the lower plate 113 and comprise a first guide column 1131 and a second guide column 1132. The sealing pad 300 is correspondingly provided with two guide column installation holes for the first guide column 1131 and the second guide column 1132. The guide columns can pass through the guide column installation holes, and thus the sealing pad 300 can move along the guide columns into the ring groove Y, thus achieving quick positioning and installation of the sealing pad 300. Of course, the number and arrangement position of the guide columns are not limited to this embodiment.

In this disclosure, the microfluidic detection apparatus 1000 is provided with a first mode and a second mode. Different flow channels are in communication by rotating the flow channel switching assembly 120, so that the microfluidic detection apparatus 1000 can be switched between the first mode and the second mode. It can be understood that during the rotation of the flow channel switching assembly 120, the position of the liquid passing groove is adjusted, and then different flow channels are in communication through the liquid passing groove.

Furthermore, in the first mode, the flow channel switching assembly 120 establishes communication between the first flow channel P1 and the second flow channel P2, and the third flow channel P3 and the fourth flow channel P4 are both independent. In other words, in the first mode, the flow channel switching assembly 120 is rotated to the first position.

In the second mode, the flow channel switching assembly 120 establishes communication among the first flow channel P1, the second flow channel P2 and the third flow channel P3 in sequence, and the fourth flow channel P4 is independent. Alternatively, the first flow channel P1 and the second flow channel P2 are both independent, while the third flow channel P3 is in communication with the fourth flow channel P4. In other words, in the second mode, the flow channel switching assembly 120 is rotated to the second position or the third position. It should be noted that in the above, a flow channel being independent means that the flow channel is not in communication with other flow channels.

In specific applications, the application scenarios of the microfluidic detection apparatus 1000 are divided into a user mode and an administrator mode. In this disclosure, the first mode is the administrator mode, and the second mode is the user mode.

Therefore, in the administrator mode, the flow channel switching assembly 120 is located at the first position, and the first flow channel P1 and the second flow channel P2 are in communication. At this time, fluid can be introduced into the second flow channel P2 through the first flow channel P1. Referring to Figures 1a and 1b, fluid is injected through the first liquid injection port C1, and the fluid sequentially passes through the first flow channel P1, the first liquid passing groove B1, the first section of second flow channel P21, the sensing area A1, and the second section of second flow channel P22 comprising the flow channel buffer area A2.

It should be noted that the surface of the sensing chip 220 has a microcavity structure. In a preferred production process, the microcavity structure in the sensing chip 220 needs to be filled with a reagent by means of vacuum negative pressure. Due to the need to build a vacuum environment, this process is carried out in the production factory. Before leaving the factory, the microfluidic detection apparatus 1000 is provided to be in the administrator mode to pre-package the reagent in the second flow channel P2 and fill the reagent into the microcavity structure of the sensing chip 220.

As can be seen from the above, the user mode comprises two situations. In the first situation, the flow channel switching assembly 120 is located at the second position, and the first flow channel P1, the second flow channel P2 and the third flow channel P3 are sequentially in communication. Referring to Figures 1a and 1c, the fluid is injected through the first liquid injection port C1 and sequentially passes through the first flow channel P1, the third flow channel groove B3, the first section of second flow channel P21, the sensing area A1, the second section of second flow channel P22 comprising the flow channel buffer area A2, the second liquid passing groove B2, and the third flow channel P3. Finally, the fluid can be temporarily stored in the third flow channel P3.

As can be seen, in this situation, the fluid passes through the sensing area A1 and the flow channel buffer area A2. In this situation, the user can inject the reagent required for sensing into the sensing area A1, and the reagent performs ion transfer with the detection liquid in the sealed chamber R below the flow channel buffer area A2.

In the second situation, the flow channel switching assembly 120 is located at the third position, and the third flow channel P3 is in communication with the fourth flow channel P4. Referring to Figure 1a and Figure 1d, in the case where the ninth flow channel port C9 serves as the liquid extraction port, the fluid in the third flow channel P3 passes through the second liquid passing groove B2 and enters into the fourth flow channel P4, and then flows out from the ninth flow channel port C9. In this way, the waste liquid collection after sensing is completed, thereby avoiding the introduction of bubbles into the sensing area A1.

As can be seen from this disclosure, the communication between different flow channels is achieved by switching through the flow channel switching assembly 120, such that the microfluidic detection apparatus 1000 switches between three states to adapt to different modes, thereby addressing both the negative pressure pre-packaging process requirements and user-initiated liquid injection scenarios, fulfilling both manufacturing and user application needs, and expanding the range of application scenarios.

As can be seen from the above, in the administrator mode, the position limiting component 124 is in the first section of sliding groove V1, and in the user mode, the position limiting component 124 is in the second section of sliding groove V2 or the third section of sliding groove V3. In a preferred embodiment, when the position limiting component 124 is located in the second section of sliding groove V2 or the third section of sliding groove V3, it cannot slide back to the first section of sliding groove V1. In other words, the microfluidic detection apparatus 1000 can be switched from the administrator mode to the user mode but cannot be switched from the user mode to the administrator mode, thereby preventing user's misoperation.

Although the embodiments of this invention have been shown and described above, it can be understood that the above embodiments are exemplary and should not be construed as limiting this invention. Ordinary skilled in the art can make changes, modifications, substitutions, and variations to the above embodiments within the scope of this invention.

In addition, terms "first" and "second" are only adopted for the objective of description, and cannot be understood to indicate or imply relative importance or implicitly indicate the number of the indicated technical features. Therefore, a feature limited by "first" or "second" may explicitly or implicitly comprise at least one such feature. In the description of this invention, unless otherwise explicitly and specifically limited, "multiple" means at least two, such as two, three, etc.

## Claims

1. A microfluidic device, **characterized in that**, the microfluidic device comprises a main body and a flow channel switching assembly;
the main body is provided with multiple flow channels;
the flow channel switching assembly is rotatably connected to the main body, the flow channel switching assembly is provided with liquid passing grooves, and the flow channel switching assembly is configured to be rotatable relative to the main body to adjust a position of the liquid passing groove, so that at least two of the multiple flow channels are in communication through the liquid passing groove.

2. The microfluidic device according to claim 1, **characterized in that**,
the multiple flow channels comprise a first flow channel, a second flow channel and a third flow channel;
the liquid passing grooves comprise a first liquid passing groove, a second liquid passing groove and a third liquid passing groove;
the flow channel switching assembly is configured in such a way that when the flow channel switching assembly is rotated to a first position, the first liquid passing groove establishes communication between the first flow channel and the second flow channel;
the flow channel switching assembly is configured in such a way that when the flow channel switching assembly is rotated to a second position, the second liquid passing groove establishes communication between the second flow channel and the third flow channel, and the third liquid passing groove establishes communication between the first flow channel and the second flow channel.

3. The microfluidic device according to claim 2, **characterized in that**,
the multiple flow channels further comprise a fourth flow channel;
the flow channel switching assembly is further configured in such a way that when the flow channel switching assembly is rotated to a third position, the second liquid passing groove establishes communication between the third flow channel and the fourth flow channel.

4. The microfluidic device according to claim 2, **characterized in that**, the first flow channel comprises a second flow channel port, the second flow channel comprises a third flow channel port and a fourth flow channel port, the third flow channel comprises a fifth flow channel port and a sixth flow channel port, and the second flow channel port, the third flow channel port, the fourth flow channel port, the fifth flow channel port and the sixth flow channel port overlap with the flow channel switching assembly in a vertical direction.

5. The microfluidic device according to claim 4, **characterized in that**, the first flow channel further comprises a first flow channel port located at a side of the flow channel switching assembly;
the microfluidic device further comprises a fluid storage component connected to the main body and in communication with the first flow channel port.

6. The microfluidic device according to claim 4, **characterized in that**,
the third flow channel further comprises a seventh flow channel port, and the seventh flow channel port is located at a side of the flow channel switching assembly and is used to discharge a fluid inside the third flow channel.

7. The microfluidic device according to claim 3, **characterized in that**, the fourth flow channel comprises an eighth flow channel port and a ninth flow channel port, and the eighth flow channel port overlaps with the flow channel switching assembly in a vertical direction.

8. The microfluidic device according to claim 2, **characterized in that**, the third flow channel is a flow channel extending in a meandering manner for collecting fluid.

9. The microfluidic device according to claim 3, **characterized in that**,
the main body is provided with a sliding groove;
the flow channel switching assembly comprises a position limiting component, and the position limiting component is configured to slide within the sliding groove during a rotation of the flow channel switching assembly relative to the main body, so as to switch the flow channel switching assembly among the first position, the second position and the third position.

10. The microfluidic device according to claim 9, **characterized in that**, the sliding groove comprises a first section of sliding groove, a second section of sliding groove, and a third section of sliding groove, and the position limiting component is configured to slide along the first section of sliding groove to rotate the flow channel switching assembly to the first position, slide along the second section of sliding groove to rotate the flow channel switching assembly to the third position, and slide along the third section of sliding groove to rotate the flow channel switching assembly to the second position.

11. The microfluidic device according to claim 10, **characterized in that**, the sliding groove is configured in such a way that the position limiting component is prevented from sliding to the first section of sliding groove when the position limiting component is located in the second section of sliding groove or the third section of sliding groove.

12. The microfluidic device according to claim 10, **characterized in that**, a groove depth of the second section of sliding groove is equal to a groove depth of the third section of sliding groove, and the groove depths of the second section of sliding groove and the third section of sliding groove are greater than a groove depth of the first section of sliding groove.

13. The microfluidic device according to claim 10, **characterized in that**,
the flow channel switching assembly further comprises a rotating body and a sealing plate, the rotating body is rotatably connected to the main body, the sealing plate and the position limiting component are both connected to the rotating body and are rotatable with the rotating body, and the sealing plate is fitted to the main body;
the first liquid passing groove, the second liquid passing groove and the third liquid passing groove are provided on the sealing plate.

14. The microfluidic device according to claim 1, **characterized in that**,
the main body comprises an upper plate, a flow channel plate and a lower plate, and both upper and lower surfaces of the flow channel plate are provided with flow channel grooves;
the upper plate and the lower plate are respectively arranged on upper and lower sides of the flow channel plate to form the multiple flow channels together with the flow channel grooves, and the multiple flow channels comprises a second flow channel.

15. The microfluidic device according to claim 14, **characterized in that**,
the multiple flow channels further comprise a first flow channel and a fourth flow channel;
the flow channel grooves comprise a first flow channel groove and a fourth flow channel groove, and the first flow channel groove and the fourth flow channel groove are arranged on the upper surface of the flow channel plate;
the first flow channel groove forms the first flow channel together with the upper plate, and the fourth flow channel groove forms the fourth flow channel together with the upper plate.

16. The microfluidic device according to claim 14, **characterized in that**,
the multiple flow channels further comprise a third flow channel;
the flow channel grooves comprise a third flow channel groove, and the third flow channel groove comprises a first section of third flow channel groove, a second section of third flow channel groove, and a third section of third flow channel groove;
the first section of third flow channel groove and the third section of third flow channel groove are arranged on the upper surface of the flow channel plate, and the second section of third flow channel groove is arranged on the lower surface of the flow channel plate;
the first section of third flow channel groove, the second section of third flow channel groove, and the third section of third flow channel groove are sequentially in communication and form the third flow channel together with the upper plate and the lower plate.

17. The microfluidic device according to claim 14, **characterized in that**,
the second flow channel comprises a first section of second flow channel and a second section of second flow channel;
the flow channel grooves comprise a second flow channel groove, the second flow channel groove comprises a first section of second flow channel groove and a second section of second flow channel groove, and the first section of second flow channel groove and the second section of second flow channel groove are arranged on the upper surface of the flow channel plate;
a first buffer groove and a second buffer groove are provided on an upper surface of the lower plate;
the first section of second flow channel groove is in communication with the first buffer groove and forms the first section of second flow channel together with the upper plate and the lower plate;
the second section of second flow channel groove is in communication with the second buffer groove and forms the second section of second flow channel together with the upper plate and the lower plate;
the first buffer groove is provided with a first liquid passing port therethrough, and the second buffer groove is provided with a second liquid passing port therethrough, wherein the first section of second flow channel and the second section of second flow channel are configured to be in communication through the first liquid passing port and the second liquid passing port.

18. The microfluidic device according to claim 2, **characterized in that**, the main body is provided with a transparent observing area, and the observing area is located above the second flow channel.

19. The microfluidic device according to claim 2, **characterized in that**,
the multiple flow channels comprise the second flow channel;
the second flow channel is provided with a flow channel buffer area, and a shape of the flow channel buffer area first gradually increases and then gradually decreases along an extension direction of the second flow channel.

20. The microfluidic device according to claim 19, **characterized in that**,
the main body is further provided with a sealed chamber, and the sealed chamber is located below the flow channel buffer area;
the microfluidic device further comprises a membrane and a conductive sheet, wherein the membrane is arranged between the sealed chamber and the flow channel buffer area, the membrane is configured to allow ion transfer between a fluid in the sealed chamber and a fluid in the flow channel buffer area, and the conductive sheet is located below the membrane and used to transmit signals outward.

21. The microfluidic device according to claim 20, **characterized in that**, the main body is further provided with a tenth flow channel port and an eleventh flow channel port, and both the tenth flow channel port and the eleventh flow channel port are in communication with the sealed chamber for injecting a detection liquid into the sealed chamber.

22. The microfluidic device according to claim 14, **characterized in that**,
a liquid storage groove is provided on the lower surface of the flow channel plate;
the flow channel grooves comprise a second section of second flow channel groove, the second section of second flow channel groove is provided with a flow channel buffer area in communication with the liquid storage groove, and the liquid storage groove is closed by a membrane and the lower plate, thereby forming a sealed chamber;
the membrane is arranged between the liquid storage groove and the flow channel buffer area, and the lower plate is provided with a conductive sheet at an overlapping position with the liquid storage groove in a vertical direction.

23. A microfluidic detection apparatus, **characterized in that**, the microfluidic detection apparatus comprises a sensing device and the microfluidic device according to any one of claims 2 to 22;
the sensing device is provided at the second flow channel and connected to the main body, and the sensing device forms a sensing area together with a corresponding part of the main body that forms the second flow channel.
